Europäisches Patentamt

European Patent Office

Office européen des brevets

(11) Numéro de publication: **0 374 030**
**A1**

## (12) DEMANDE DE BREVET EUROPEEN

(21) Numéro de dépôt: 89403432.1

(22) Date de dépôt: **12.12.89**

(51) Int. Cl.⁵: **B60G 21/04**

(30) Priorité: **13.12.88 FR 8816374**

(43) Date de publication de la demande: ·
**20.06.90 Bulletin 90/25**

(84) Etats contractants désignés:
**DE ES GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Pierre, Jacques**
**35, rue Victor Pauchet**
**F-92420 Vaucresson(FR)**

(54) **Suspension mécanique de type isostatique notamment pour véhicule automobile.**

(57) Suspension mécanique de type isostatique notamment pour véhicule automobile comportant des essieux (7) et (10) articulés (01-0′1) et (02-0′2) sur la caisse du véhicule et portant chacun un ressort à lames transversal (1) et (2) et dont les mouvements angulaires sont conjugués par une timonerie (13) n'autorisant que des rotations de sens inverse.

## FIG.3

# SUSPENSION MECANIQUE DE TYPE ISOSTATIQUE NOTAMMENT POUR VEHICULE AUTOMOBILE

L'invention concerne un nouveau type de suspension mécanique, notamment pour les véhicules automobiles qui permet d'assurer les fonctions habituelles de la suspension et qui sont :
- la tenue de route,
- le confort des passagers,
- le ménagement de la structure,
sur tous les types de route, même sur les chemins peu carrossables.

Une suspension est un ensemble de pièces reliant les "éléments suspendus" (caisse du véhicule) à des "éléments non suspendus" (roues), cet ensemble permettant d'amortir les chocs dus aux déplacements desdites roues.

Les suspensions classiques comportent un ressort affecté à chaque roue, et il n'y a pas de système d'équilibrage interne entre ces ressorts. C'est seulement la déformation différente des quatre ressorts qui permet aux quatre roues d'être simultanément en appui sur le sol même quand le quadrilatère d'appui est gauche. On dit qu'une telle suspension est "hyperstatique" parce que les équations d'équilibre du véhicule (équation de la statique) ne sont pas suffisantes pour déterminer les charges d'appui au sol (contrairement au cas des systèmes dits "isostatiques", exemple : véhicule à 3 roues), il faut en plus faire intervenir le gauchissement du quadrilatère d'appui et l'élasticité de la suspension.

Ces suspensions hyperstatiques donnent généralement satisfaction lorsque le véhicule est utilisé sur les bonnes routes.

En cas de circulation sur chemins à peine carrossables, voire en tout-terrain, et plus précisément chaque fois que le quadrilatère formé par les quatre points d'appui au sol a un gauchissement accentué, la suspension classique manifeste deux inconvénients graves.

En effet, les déformations en sens contraire des systèmes élastiques interposés entre les roues et la caisse introduisent dans celle-ci deux couples antagonistes : un au droit de chaque essieu. Ceci a deux conséquences néfastes, les inconvénients annoncés plus haut :

- La caisse est soumise à un effort de torsion. La déformation qui en résulte est susceptible par exemple de coincer les portières empêchant leur ouverture. On peut observer ceci simplement en arrêtant une voiture avec une seule roue sur le trottoir, si celui-ci est assez haut. En mouvement ces déformations peuvent s'accompagner de grincements. La parade habituelle est de conférer à la caisse und grande rigidité de structure.

- Les charges au sol des 2 roues de chaque essieu deviennent fortement inégales : une roue est surchargée tandis que l'autre est délestée. Il en résulte, même si le véhicule a ses quatre roues motrices, une importante perte de motricité car celle-ci est gouvernée pour chaque train par la roue la moins chargée.

En fait, avec les suspensions "classiques" qui sont hyperstatiques, c'est seulement grâce à l'élasticité des liaisons entre roues et caisse (les ressorts dits de suspension) que les 4 roues peuvent reposer sur un quadrilatère d'appui gauche, mais ceci se fait au détriment de la répartition des charges sur les roues. On pourrait diminuer les reports de charges (surcharge et délestage) d'une roue à l'autre en assouplissant les suspensions mais cette voie est bien sûr limitée car elle conduit à un maintien de caisse insuffisant en virage quand la force centrifuge se manifeste.

A l'inverse s'il n'y a pas de suspension, ce qui revient à annuler la flexibilité des liaisons roue/caisse, l'appui simultané des quatre roues sur sol dénivelé est impossible. Ce cas est comparable à celui d'une table à quatre pieds posée sur un plancher déformé : la table "boîte".

Le remède radical aux inconvénients cités ci-dessus consiste à établir entre les débattements (mouvements verticaux) des roues une conjugaison interne appropriée. Il en résulte une relation d'équilibre entre les charges sur les roues : l'ensemble est devenu isostatique au lieu d'hyperstatique, de sorte que les quatre roues peuvent s'adapter au gauchissement du quadrilatère d'appui au sol sans qu'ait besoin d'intervenir une déformation élastique des ressorts de suspension. Ainsi, les charges au sol sont indépendantes du gauchissement du quadrilatère d'appui.

L'exemple le plus simple qu'on puisse trouver de liaison au sol isostatique est le montage de l'essieu AV en balancier sur un appui central, système appliqué à tous les tracteurs agricoles (il n'y a pas ici de "suspension" élastique).

Ce dispositif rudimentaire confie la totalité de la fonction antidéversement à l'essieu AR diminuant ainsi fâcheusement la réserve de stabilité comme dans le cas d'un véhicule à trois roues.

Les systèmes isostatiques plus évolués font participer les deux essieux à la fonction antidéversement, dans la proportion jugée optimale.

L'invention décrite ici appartient à cette famille. Elle comporte le mécanisme de conjugaison (ou encore d'équilibrage) entre ressort AV et ressort AR strictement nécessaire et suffisant à l'atteinte du but fixé : l'isostatisme.

Pour bien montrer ce qu'apporte l'invention par rapport aux dispositifs connus, partons du système simple sans suspension élastique décrit par le brevet américain n° 3 584 892 et applicable à un chariot de manutention. Ici chaque essieu est monté "en balancier" sur un appui central et les mouvements de balancement (ou de dévers) des deux essieux sont conjugués grâce à deux leviers longitudinaux moulés eux aussi en balancier. La conjugaison est telle que les dévers des deux essieux sont toujours de sens opposé et dans un rapport constant lequel est donné par la position du point d'articulation des leviers longutidinaux.

Les lois de la mécanique nous disent que l'équilibre des forces est gouverné par la relation entre les déplacements (ici les angles de dévers des deux essieux) et non par le détail du mécanisme de liaison. On peut tirer de ceci deux conséquences au sujet du dispositif examiné :

- Les deux leviers longitudinaux font double emploi. On peut en supprimer un (n'importe lequel) sans changer les propriétés du système.

- Le levier de conjugaison peut être agencé différemment au même remplacé par une timonerie comportant par exemple deux équerres reliées par un tige longitudinale pourvu que cette timonerie engendre entre les balancements angulaires des deux essieux la même relation que le levier qu'elle remplace.

Nous définissons ainsi des liaisons (par levier ou par timonerie) strictement nécessaires et suffisantes alors que la liaison par 2 leviers était surabondante.

Il faut maintenant faire coopérer ce dispositif d'équilibrage interne avec une suspension élastique.

Des inventeurs ont proposé pour cela de réaliser le cadre articulé décrit ci-dessus avec des éléments élastiques au lieu de rigides. Dans le brevet français n° 949 761, les deux essieux deviennent deux ressorts de flexion (ressorts à lames) transversaux et les deux balanciers deviennent deux ressorts de flexion longitudinaux. La condition d'équilibre interne entre les charges aux roues est conservée, donc ce dispositif est bien isostatique. Toutefois, pour atteindre ce résultat, il comporte plus de liaisons que le strict nécessaire et surtout ses propriétés de rappel élastique ne sont pas satisfaisantes, comme le montre l'explication suivante :

- un mouvement (*) de tangage pur déforme seulement les ressorts transversaux,

- un mouvement (*) de roulis pur déforme seulement les ressorts longitudinaux,

- un mouvement (*) de translation verticale de la caisse déforme les quatre ressorts.

(*) Il s'agit d'un mouvement de la caisse, le sol étant fixe

Ainsi, la raideur des ressorts transversaux doit satisfaire à l'exigence du rappel en langage. La raideur des ressorts longitudinaux doit satisfaire à l'exigence du rappel en roulis et le rappel en translation verticale donné par la somme des raideurs se trouve être excessif, raison pour laquelle un tel dispositif n'est pas satisfaisant.

Il n'est pas satisfaisant non plus à cause de l'encombrement de ses ressorts longitudinaux, mal commodes à implanter.

Notre invention conserve les caractéristiques de rappel élastique des suspensions classiques, à savoir une "suspension AV" et une suspension AR" qui assurent à la fois le rappel en tangage et le rappel en translation verticale.

Le rappel en roulis est assuré aussi par cette suspension principale complétée si besoin est par des dispositifs antiroulis qui n'interviennent pas dans les deux autres mouvements. On peut ainsi ajuster ce rappel indépendamment des deux autres rappels.

Quant à la difficulté d'installation des ressorts de flexion longitudinaux, elle disparaît avec la suppression de ceux-ci.

L'invention se propose d'obtenir une suspension avec une répartition isostatique des charges au sol, c'est-à-dire une répartition entièrement déterminée par les équations d'équilibre. Cette répartition n'est pas influencée par la gauchissement du quadrilatère d'appui au sol : ainsi, avec la suspension décrite, la circulation lente ou le stationnement sur sol très dénivelé (par exemple une seule roue sur le trottoir) ne produisent pas de torsion de la caisse ni de délastage d'une roue.

Les avantages attendus portent sur :
- un motricité améliorée par un meilleur appui des roues sur le sol soit avec une transmission classique, soit avec une transmission intégrale,
- une diminution des sollicitations de la structure du véhicule dont l'effet est :
. un allègement de cette structure,
. une diminution des bruits.

Les dessins annexés illustrent l'invention :

- La figure 1 représente une vue simplifiée de la suspension sur sol plan.

- La figure 2 représente la même suspension sur sol déformé (les essieux sont "croisés").

- La figure 3 représente une autre vue en perspective selon un premier mode de réalisation de la timonerie.

- La figure 4 représente une autre vue en perspective selon un deuxième mode de réalisation de la timonerie.

- La figure 5 représente une autre vue en perspective selon un troisième mode de réalisation de la timonerie.

- La figure 6 représente une forme de réalisation particulière de la construction où les équerres rigides sont remplacées par des manivelles élastiques en torsion.

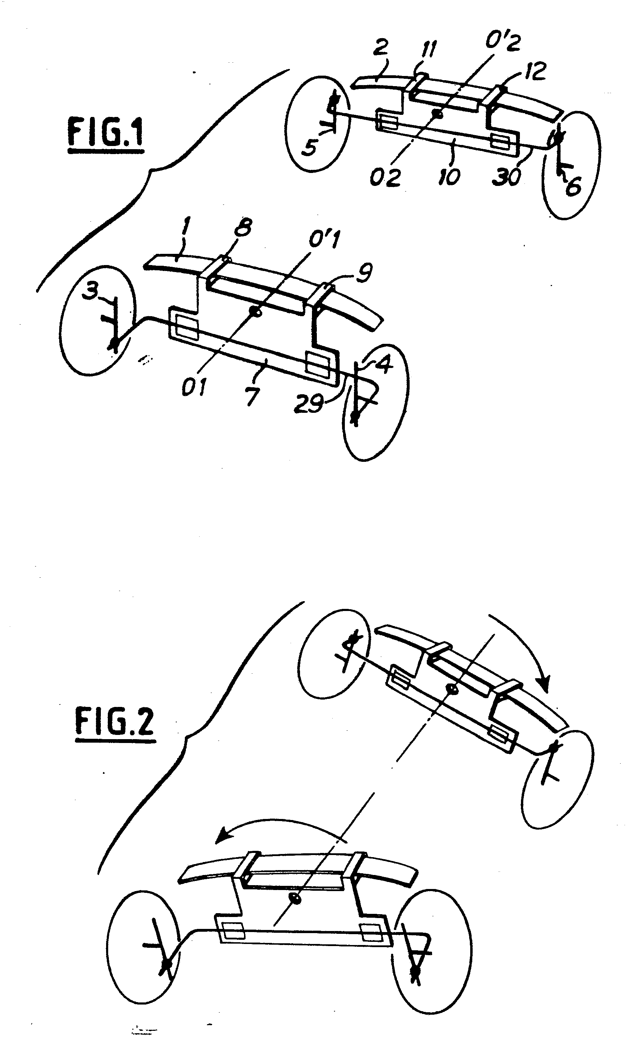

Sur la figure 1, on peut voir l'objet de l'invention qui montre le système de palonnage conjugué des ressorts avant et arrière. Le véhicule est porté par deux ressorts à lames transversaux 1 et 2 en appui sur les porte-fusées avant 3 et 4 et arrière 5 et 6, ceux-ci étant guidés par des moyens connus mais non représentés. Le ressort à lame transversal 1 est maintenu dans le berceau avant 7 en appui sur deux barrettes 8 et 9. Ce double appui peut être remplacé par un encastrement central (non représenté). Ce berceau avant 7 est articulé à la caisse autour de l'axe longitudinal 01-0'1.

De la même façon le ressort à lame transversal arrière 2 est maintenu dans le berceau arrière 10 en appui sur deux barrettes 11 et 12 qui peuvent être remplacées par un encastrement central (non représenté). Le berceau arrière 10 est articulé à la caisse autour de l'axe longitudinal 02-0'2.

Alors que la figure 1 représente les quatre roues en appui sur un sol relativement plan, la figure 2 représente la même suspension où les roues sont en appui sur une surface très déformée. On y voit très bien les positions angulaires relatives des deux berceaux 7 et 10 portant les ressorts à lames 1 et 2.

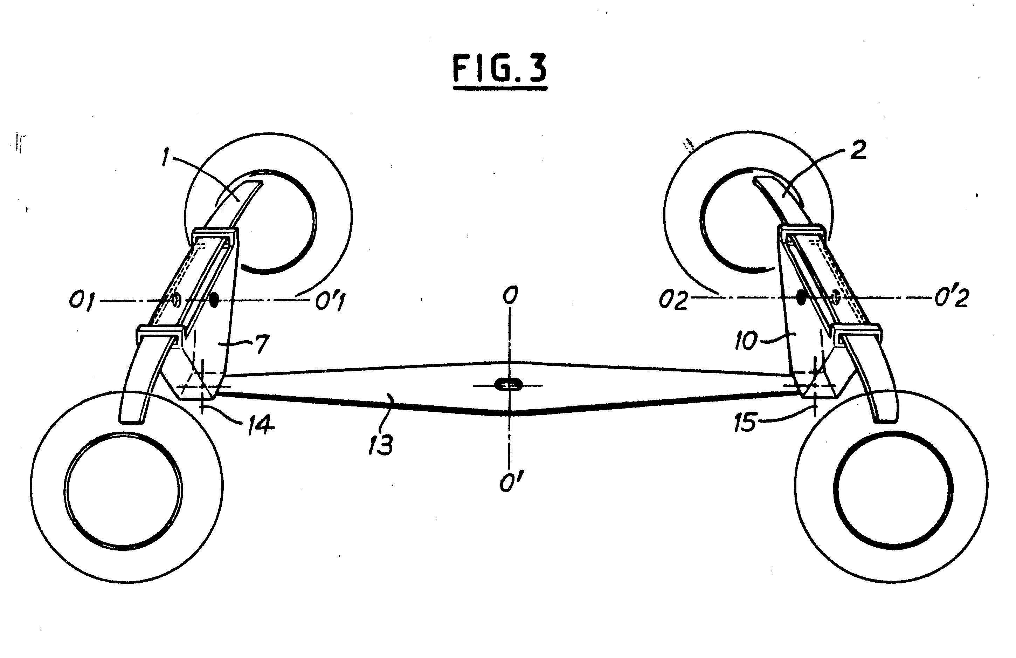

Les mouvements angulaires des berceaux 7 et 10 sont conjugués par une timonerie n'autorisant que des rotations de sens inverse dont une première réalisation est illustrée sur la figure 3.

Ces rotations inverses sont provoquées par le levier 13 articulé sur un axe vertical 00' fixe sur la structure du véhicule det sensiblement positionné en son milieu. Des articulations 14 et 15 relient les points homologues des berceaux 7 et 10.

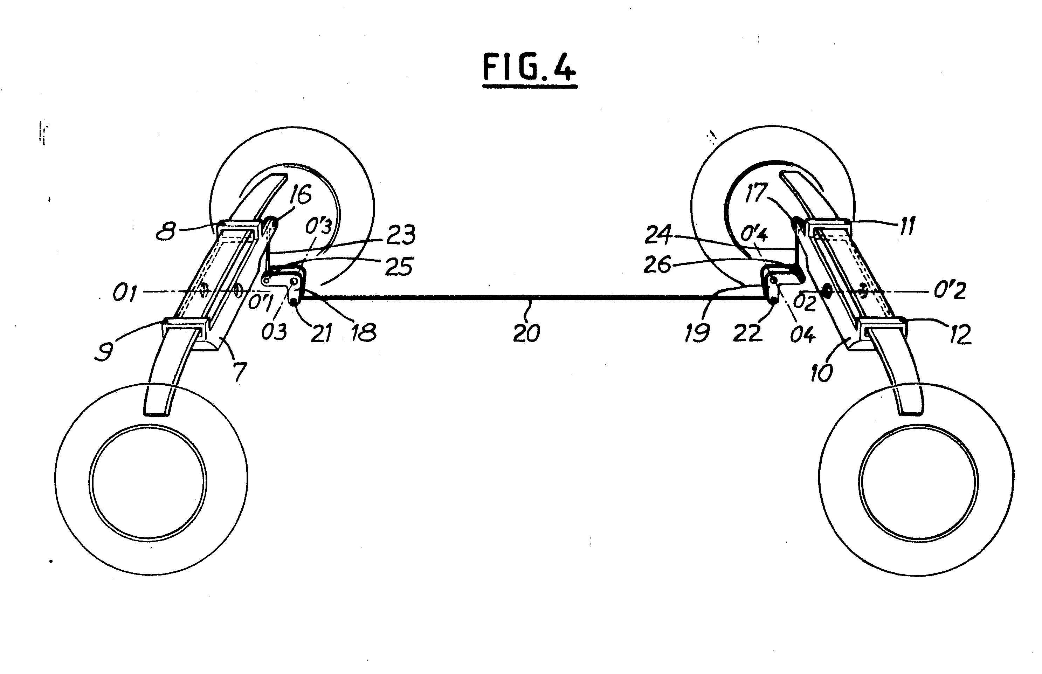

La figure 4 décrit une forme de réalisation avec une timonerie plus légère assurant la liaison par une tringle travaillant en traction et en compression, au lieu du levier 13 qui travaille en flexion.

Cette timonerie, qui n'autorise que les rotations de sens inverse des berceaux 7 et 10, relie deux points homologues des berceaux avant et arrière. Elle est constituée par deux équerres 18 et 19 articulées sur des axes horizontaux fixés sur la structure du véhicule 03-0'3 et 04-0'4 liées entre elles par une tringle 20 travaillant en traction et en compression et articulée 21 et 22 par ses extrémités aux équerres 18 et 19. Des biellettes de transmission 23 et 24 sont articulées en 16 sur le berceau avant 7 et en 17 sur le berceau arrière 10 et en 25 sur l'équerre 18 et en 26 sur l'équerre 19.

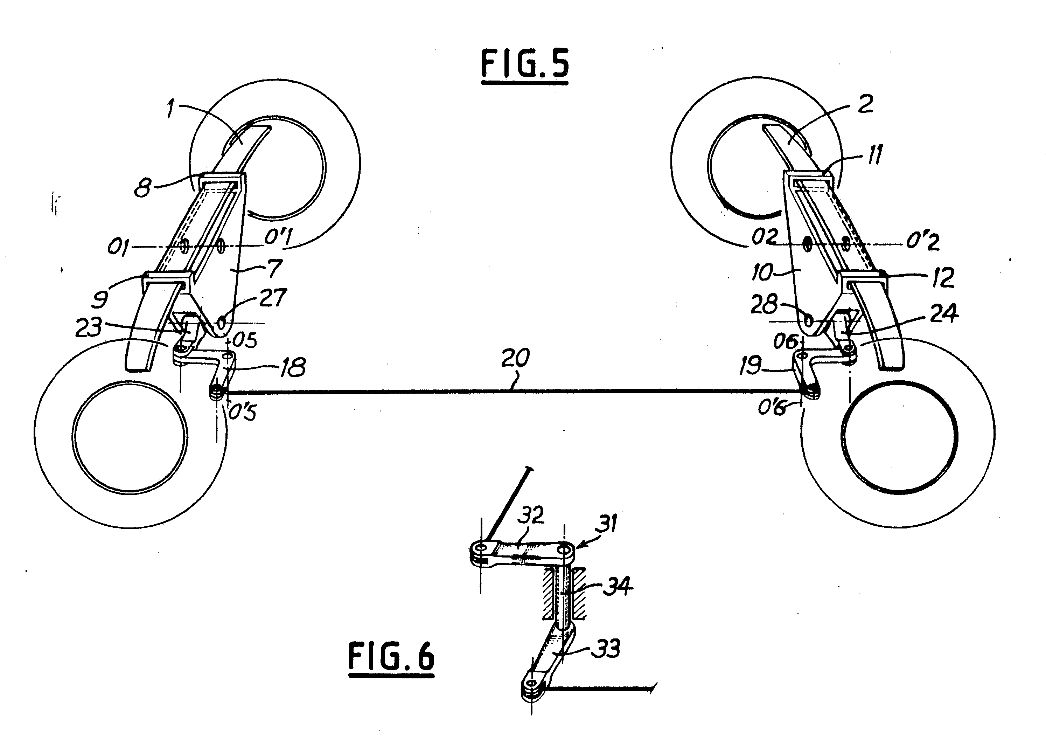

La timonerie décrite sur la figure 5 est dans son principe identique à celle décrite sur la figure 4. Elle illustre la transmission d'un mouvement dont le point d'application sur les berceaux 7 et 10 débat dans un plan horizontal alors que ce débattement se faisait dans un plan vertical sur la description de la figure 4. On y retrouve les mêmes organes : les équerres 18 et 19 sont articulées sur des axes fixes sur la structure du véhicule 05-0'5 et 06-0'6 en position verticale. Les biellettes 23 et 24 débattent dans des plans sensiblement horizontaux car elles sont attaquées en 27 et 28 à la partie inférieure des berceaux 7 et 10. La tringle 20 assure bien entendu la même fonction.

Mais on peut aussi partir d'un point à déplacement oblique dans le plan transversal situé sur un rayon quelconque partant de 01-0'1 et 02-0'2.

Les timoneries décrites ci-dessus ont pour effet de partager les couples antidéversement dans un rapport constant. Ces couples ne peuvent plus être de sens contraire, ce qui évite de solliciter la caisse en torsion entre ses trains de roue.

Le taux de partage pourra être ajusté à volonté en atelier si on prévoit dans ce système de timonerie, au moins un levier réglable en longueur (par exemple 02-0'2/25 ou 02-0'/21 pour l'équerre 18).

L'intensité de rappel en roulis dépend de l'écartement des appuis tels que 8 et 9, 11 et 12. Un tel système de double appui confère une plus grande raideur de roulis que le simple encastrement central, ceci étant connu.

On peut encore augmenter la raideur en roulis de cette suspension en lui adjoignant des barres antiroulis classiques et conserver l'isostatisme à la condition que ces barres 29 et 30 soient portées par les berceaux 7 et 10.

Si, au contraire, on désire diminuer la raideur de rappel en roulis, après avoir remplacé les appuis doubles 8 et 9, 11 et 12 par des encastrements, on peut introduire une élasticité dans la timonerie en remplaçant, par exemple, les équerres rigides 18 et 19 par des manivelles 31 élastiques dont les bras rigides 32 et 33 sont solidaires d'un élément à torsion 34. Cette construction est décrite sur la figure 5.

## Revendications

1°) Suspension mécanique de type isostatique pour véhicule automobile comportant un dispositif formant un essieu constitué par un berceau (7) articulé à sa partie centrale sur la structure du véhicule et portant les roues avant, un dispositif formant un essieu constitué par par un berceau (10) articulé par sa partie centrale sur la structure du véhicule et portant les roues arrière, et dont les mouvements angulaires sont conjugués par une timonerie (13 ; 18, 19, 20) n'autorisant que des rotations en sens inverse et dans laquelle les berceaux (7) et (10) portent chacun un ressort à lames transversal (1) et (2) en appui sur les porte-fusées (3) et (4), (5) et (6), caractérisée en ce que les points d'application (14), (15) ou (16) (17) ou (27) (28) de la timonerie (13) ou (18), (19), (20), sur les berceaux (7), (10) sont situés sur un rayon centré sur l'axe d'articulation (01-0'1) et (02-0'2) desdits berceaux.

2°) Suspension suivant la revendication 1, caractérisée en ce que la position des appuis (8) et (9), (11) et (12) des ressorts à lames transversaux (1) et (2) sur les berceaux (7) et (10) est réglable en largeur sur lesdits berceaux.

3°) Suspension suivant l'une quelconque des revendications 1 ou 2, caractérisée en ce que la longueur des leviers (03-0'3)-(21) ou (03-0'3)-(25) est réglable.

4°) Suspension selon l'une quelconque des revendications précédentes, caractérisée en ce que les berceaux (7) et (10) portent des barres antiroulis (29) et (30).

FIG.1

FIG.2

FIG.3

# FIG.4

EP 0 374 030 A1

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-C- 675 531 (SCHRÖTER)<br>* Page 2, lignes 17-88; figures *<br>--- | 1 | B 60 G 21/04 |
| Y | FR-A- 900 973 (TATRA)<br>* En entier *<br>--- | 1 | |
| A | FR-A- 381 165 (O'WADE)<br>* En entier *<br>--- | 1,3 | |
| A | FR-A-1 586 286 (VOLVO)<br>* Page 4, lignes 4-17,25-30; figures 1,2 *<br>--- | 1,3 | |
| A | DE-B-1 083 671 (FENDT)<br>* Colonne 2, ligne 51 - colonne 3, ligne 13; figures 1,2 *<br>--- | 2 | |
| A | GB-A-2 202 498 (BOOHER)<br>* Page 9, lignes 1-23; figure 2 *<br>--- | 1,4 | |
| A | FR-A-2 552 718 (POPINET)<br>* Pages 12,13; figures 1-8 *<br>--- | 1 | DOMAINES TECHNIQUES RECHERCHES (Int. Cl.5) |
| A | FR-A-1 141 269 (GRAMATZKI)<br>--- | | B 60 G |
| A | FR-A- 656 967 (LANNELUC-SANSON)<br>--- | | |
| A | US-A-3 917 306 (MADLER)<br>--- | | |
| A | EP-A-0 238 426 (DELERY)<br>----- | | |

Le présent rapport a été établi pour toutes les revendications

| Lieu de la recherche | Date d'achèvement de la recherche | Examinateur |
|---|---|---|
| LA HAYE | 06-03-1990 | ESPEEL R.P. |